(19) Europäisches Patentamt
European Patent Office
Office européen des brevets

(11) **EP 3 607 398 B1**

(12) **EUROPEAN PATENT SPECIFICATION**

(45) Date of publication and mention
of the grant of the patent:
**12.01.2022 Bulletin 2022/02**

(21) Application number: **17903368.3**

(22) Date of filing: **01.04.2017**

(51) Int Cl.:
***G02F 1/1343*** (2006.01)

(86) International application number:
**PCT/CN2017/079339**

(87) International publication number:
**WO 2018/176483 (04.10.2018 Gazette 2018/40)**

(54) **ARRAY SUBSTRATE, LIQUID CRYSTAL DISPLAY PANEL AND LIQUID CRYSTAL DISPLAY APPARATUS**

ARRAYSUBSTRAT, FLÜSSIGKRISTALLANZEIGETAFEL UND FLÜSSIGKRISTALLANZEIGEVORRICHTUNG

SUBSTRAT DE RÉSEAU, PANNEAU D'AFFICHAGE À CRISTAUX LIQUIDES ET APPAREIL D'AFFICHAGE À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.02.2020 Bulletin 2020/07**

(73) Proprietors:
• **BOE Technology Group Co., Ltd.**
**Beijing 100015 (CN)**
• **Beijing BOE Display Technology Co., Ltd.**
**Beijing 100176 (CN)**

(72) Inventors:
• **WANG, Fangyu**
**Beijing 100176 (CN)**
• **SHAO, Xibin**
**Beijing 100176 (CN)**
• **ZHANG, Zhenyu**
**Beijing 100176 (CN)**
• **CHEN, Dongchuan**
**Beijing 100176 (CN)**
• **QIAN, Xueqiang**
**Beijing 100176 (CN)**

(74) Representative: **Hoffmann Eitle**
**Patent- und Rechtsanwälte PartmbB**
**Arabellastraße 30**
**81925 München (DE)**

(56) References cited:
CN-A- 101 441 369        CN-A- 101 995 700
CN-A- 105 137 680        CN-A- 105 676 550
CN-U- 203 894 515        KR-A- 20090 116 856
US-A1- 2008 068 539      US-A1- 2012 249 496

**Description**

TECHNICAL FIELD

The present invention relates to display technology, more particularly, to an array substrate, a liquid crystal display panel and a liquid crystal display apparatus.

BACKGROUND

In a fringe field driven liquid crystal panel, the liquid crystal layer is driven by a fringe electric field. Examples of fringe field driven liquid crystal display panel include an advanced super-dimensional switching (ADS) liquid crystal display panel. For example, in the ADS liquid crystal display panel, a multi-dimensional electrical field is formed by an electric field generated by edges of slit electrodes in a same plane, and an electric field generated by a slit electrode layer and a plate electrode layer. The liquid crystal molecules between the slit electrodes and above the slit electrodes are rotated by the above-mentioned electrode fields. The operation efficiency and the light transmittance efficiency of the liquid crystal display panel are greatly improved in the ADS liquid crystal display panel.

US 2008/068539 A1 discloses a liquid crystal display panel including an array substrate. The array substrate includes a plurality of scan lines provided in parallel with one another, and a plurality of signal lines provided in a direction orthogonal to the scan lines. First electrodes are each provided in a space delimited by the scan lines and the signal lines, second electrodes are provided corresponding to the first electrodes with an insulator therebetween, and a plurality of slits are provided to each of the second electrodes in parallel with one another in a direction crossing the signal lines. Each slit has a closed end on one side, and an open end on the other.

CN 105 676 550 A discloses an array substrate comprising a slit electrode. The slit electrode comprises a plurality of slits; and one end of each of the slits is opened. The plurality of electrode strips are connected electrically. In the same domain, two adjacent electrode strips are parallel with each other. A slit is formed between two adjacent electrode strips, in which openings of slits between one electrode strip and two electrode strips adjacent to this electrode strip are disposed on different sides of the slit electrode.

US 2012/249496 A1 discloses a pixel array of a fringe field switching liquid crystal display panel including a plurality of gate lines, a plurality of data lines, a plurality of pixel electrodes, and a plurality of common lines. The plurality of pixel electrodes, respectively disposed in each of the sub-pixel regions. Each of the pixel electrodes includes a plurality of stripe structures for driving the fringe field switching liquid crystal display panel.

SUMMARY

In one aspect, the present invention provides an array substrate according to claim 1.

Optionally, the first electrode layer is a plate electrode layer extending substantially throughout one of the plurality of subpixel areas.

Optionally, each of the plurality of branches extends substantially throughout the one dimension of the second electrode layer.

Optionally, the first end and the second end are in peripheral regions of the second electrode layer.

Optionally, the plurality of branches extend substantially along a longitudinal direction of the subpixel area.

Optionally, the first electrode layer is a common electrode layer, and the second electrode layer is a pixel electrode layer.

Optionally, the second electrode layer is a common electrode layer, and the first electrode layer is a pixel electrode layer.

In another aspect, the present invention provides a liquid crystal display panel comprising the array substrate described herein, a counter substrate facing the array substrate, and a liquid crystal layer between the array substrate and the counter substrate.

Optionally, the liquid crystal display panel is a fringe field driven liquid crystal display panel, in which liquid crystal molecules in the liquid crystal layer is driven by a fringe electric field.

In another aspect, the present invention provides a liquid crystal display apparatus comprising a liquid crystal display panel described herein.

BRIEF DESCRIPTION OF THE FIGURES

The following drawings are merely examples for illustrative purposes according to various disclosed embodiments and are not intended to limit the scope of the present invention.

FIG. 1 is a schematic diagram illustrating the structure of a conventional liquid crystal display panel.
FIG. 2 is a cross-sectional view along A-A' line of the liquid crystal display panel in FIG. 1.
FIG. 3 is a schematic diagram illustrating the structure of a liquid crystal display panel according to the invention.
FIG. 4 is a cross-sectional view along B-B' line of the liquid crystal display panel in FIG. 3.
FIG. 5 is a schematic diagram illustrating the structure of a liquid crystal display panel not according to the invention.
FIG. 6 is a schematic diagram illustrating the structure of a liquid crystal display panel not according to the invention.
FIG. 7 is a cross-sectional view along C-C' line of the liquid crystal display panel in FIG. 6.

FIG. 8 is a cross-sectional view along D-D' line of the liquid crystal display panel in FIG. 6.

FIG. 9 is a schematic diagram illustrating the structure of a conventional liquid crystal display panel.

FIG. 10 is a schematic diagram illustrating the structure of a liquid crystal display panel not according to the invention.

FIG. 11 is a schematic diagram illustrating the structure of a liquid crystal display panel not according to the invention.

FIG. 12 is a schematic diagram illustrating the structure of a liquid crystal display panel not according to the invention.

DETAILED DESCRIPTION

The disclosure will now be described more specifically with reference to the following embodiments. It is to be noted that the following descriptions of some embodiments are presented herein for purpose of illustration and description only. It is not intended to be exhaustive or to be limited to the precise form disclosed.

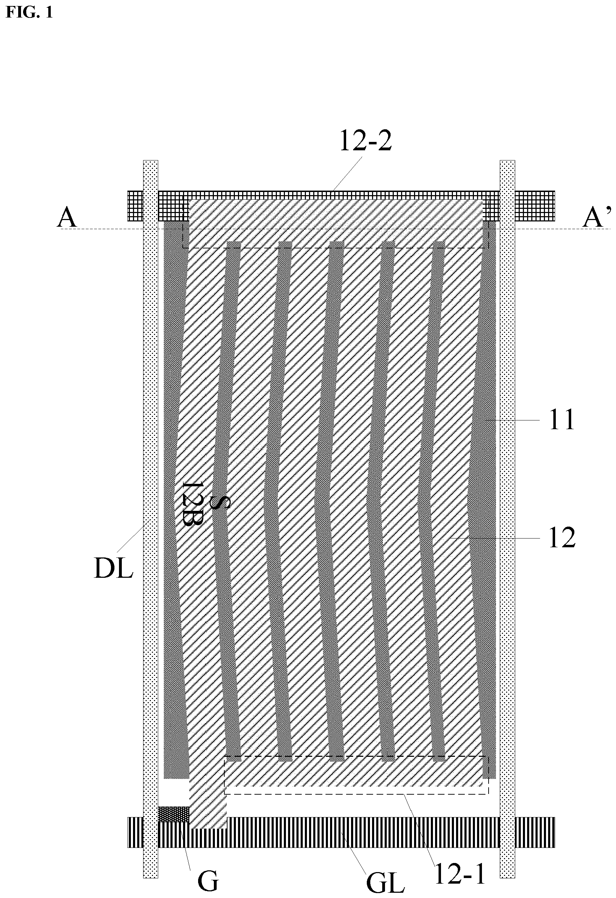

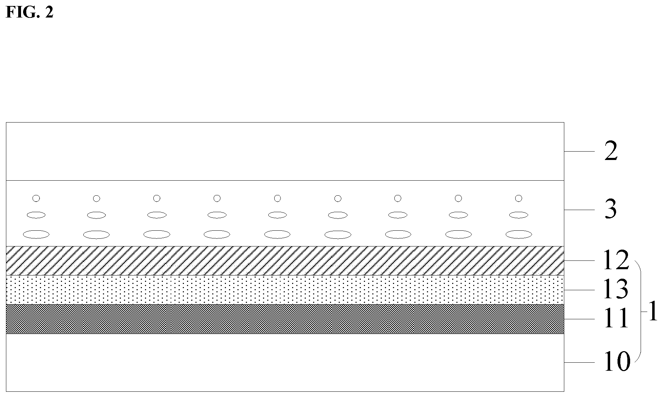

FIG. 1 is a schematic diagram illustrating the structure of a conventional liquid crystal display panel. FIG. 2 is a cross-sectional view along A-A' line of the liquid crystal display panel in FIG. 1. Referring to FIGs. 1 and 2, the conventional liquid crystal display panel includes an array substrate 1, a counter substrate 2 facing the array substrate 1, and a liquid crystal layer 3 between the array substrate 1 and the counter substrate 2. The liquid crystal display panel includes a first electrode layer 11, a second electrode layer 12, and an insulating layer 13 between the first electrode layer 11 and the second electrode layer 12. The second electrode layer 12 may be, for example, a pixel electrode layer. As shown in FIG. 1, the pixel electrode layer includes a plurality of branches 12B spaced apart by a plurality of slits S. The plurality of branches 12B are connected together by a first bar 12-1 at the bottom of the second electrode layer 12 and a second bar 12-2 at the top of the second electrode layer 12. Each of the plurality of slits S has a first end and a second end, both of which are closed ends. For example, the first bar 12-1 and the second bar 12-2 close each of the plurality of slits S at its first end and the second end. The first electrode layer 11 extends to the edges of the subpixel area. Referring to FIG. 1, a projection of the first electrode layer 11 on a base substrate 10 overlaps with that of the first bar 12-1 of the second electrode layer 12 throughout the width of the first electrode layer 11 along the edge of the subpixel area. Due to the large overlapping areas between the first electrode layer 11 and the second electrode layer 12, e.g., in the regions corresponding to the first bar 12-1 and the second bar 12-2, a large storage capacitance forms between the first electrode layer 11 and the second electrode layer 12. The storage capacitance may be determined by the following equation:

$$C = \varepsilon \, \frac{S}{d};$$

wherein $\varepsilon$ is the dielectric constant, S is the overlapping area of the first electrode layer 11 and the second electrode layer 12, and d is the distance between the first electrode layer 11 and the second electrode layer 12.

Typically, the first electrode layer 11 and the second electrode layer 12 are made of indium tin oxide or other similar metal oxide or transparent conductive materials. Along the edges of the subpixel area, light has to pass through two electrode layers, e.g., first passing through the first electrode layer 11, then passing through the first bar 12-1 or the second bar 12-2. Thus, light transmittance in the regions corresponding to the first bar 12-1 and the second bar 12-2 is reduced, e.g., by 20%, forming dark areas along the edges of the subpixel area.

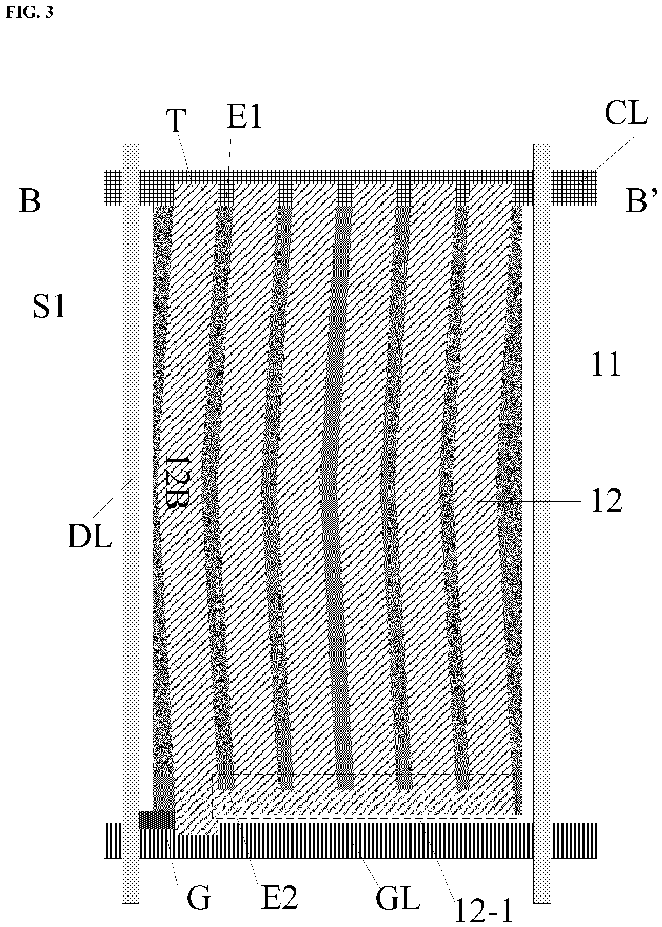

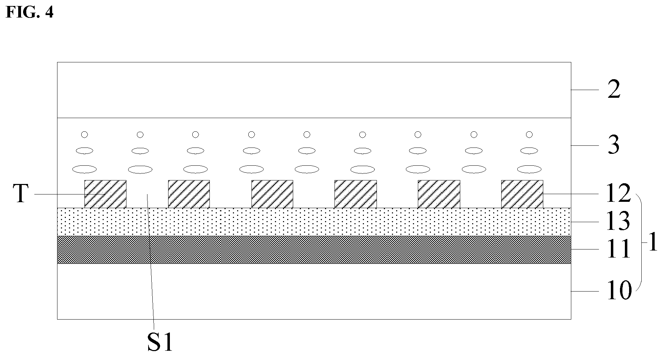

FIG. 3 is a schematic diagram illustrating the structure of a liquid crystal display panel according to the present invention. FIG. 4 is a cross-sectional view along B-B' line of the liquid crystal display panel in FIG. 3. Referring to FIGs. 3 and 4, the liquid crystal display panel includes an array substrate 1, a counter substrate 2 facing the array substrate 1, and a liquid crystal layer 3 between the array substrate 1 and the counter substrate 2. The liquid crystal display panel includes a plurality of subpixels. In each subpixel, the liquid crystal display panel includes a first electrode layer 11, a second electrode layer 12, and an insulating layer 13 between the first electrode layer 11 and the second electrode layer 12. The first electrode layer 11 and the second electrode layer 12 are configured to form a fringe field for driving liquid crystal molecules in the liquid crystal layer 3. The liquid crystal display panel further includes a plurality of gate lines GL and a plurality of data lines DL crossing over each other thereby defining a plurality of subpixels. Each subpixel further includes a switching thin film transistor having a gate electrode G for driving image display in the subpixel. When the second electrode layer 12 is a pixel electrode layer (as shown in FIG. 3), the second electrode layer 12 is connected to a drain electrode of the switching thin film transistor, and one of the plurality of data lines DL is connected to a source electrode of the switching thin film transistor. Optionally, the second electrode layer 12 is a common electrode layer, the first electrode layer 11 is a pixel electrode layer, and the first electrode layer 11 is connected to the drain electrode of the switching thin film transistor.

As shown in FIG. 3, the first electrode layer 11 (e.g., a common electrode layer) is a plate electrode layer that extends substantially throughout the subpixel, e.g., extending to a first edge of the subpixel (e.g., proximal to the B-B' line in FIG. 3). The second electrode layer 12 includes a plurality of branches 12B, each of which extends substantially along a longitudinal direction of the subpixel. Optionally, the plurality of branches 12B extend along a direction substantially parallel to the plurality of data lines DL. Optionally, the plurality of branches 12B extend along a direction substantially parallel to the plurality of gate lines GL. The plurality of branches 12B are spaced apart by a plurality of slits (e.g., a first slit S1 in FIG. 3).

In the embodiment depicted in FIG. 3 and according to the invention, each of the plurality of branches 12B corresponds to one of the plurality of teeth T, e.g., each of the plurality of teeth T includes only one of the plurality of branches 12B. Adjacent teeth of the plurality of teeth T are spaced apart by a first slit S1. Thus, in the embodiment depicted in FIG. 3, adjacent branches of the plurality of branches 12B are spaced apart by a first slit S1.

The first slit S1 is open at a first end E1 (e.g., the end proximal to a first signal line along a first edge of the subpixel), and closed at a second end E2 (e.g., the end proximal to a second signal line along a second edge of the subpixel, the second edge opposite to the first edge). The first end E1 is opposite to the second end E2. The first slit S1 extends along a direction substantially parallel to the adjacent teeth (or adjacent branches 12B in an embodiment depicted in FIG. 3), the first end E1 of the first slit S1 proximal to a first end of one of the plurality of branches 12B and distal to a second end of the one of the plurality of branches 12B opposite to the first end of the one of the plurality of branches 12B; and the second end E2 of the first slit S1 proximal to the second end of one of the plurality of branches 12B and distal to the first end of the one of the plurality of branches 12B. The first slit S1 extends substantially throughout one dimension of the second electrode layer 12, e.g., throughout the longitudinal dimension of the second electrode layer 12. Adjacent teeth are separated from each other at the first end E1 and connected to each other at the second end E2. In the embodiments depicted in FIG. 3, adjacent branches of the plurality of branches 12B are separated from each other at the first end E1 and connected to each other at the second end E2.

In the embodiment depicted in FIG. 3, the second electrode layer 12 is a comb-shaped electrode layer having a plurality of teeth T and a bar (e.g., a first bar 12-1 as shown in FIG. 3) connecting the adjacent teeth of the plurality of teeth T at the second end E2. As compared to conventional liquid crystal display panels, the liquid crystal display panel as shown in FIG. 3 only has one bar along only one edge of the subpixel, e.g., lacks a second bar along an opposite edge of the subpixel. Comparing the cross-sections illustrated in FIG. 2 and FIG. 4, the present design greatly reduces the overlapping area between the first electrode layer 11 and the second electrode layer 12. As a result, the storage capacitance between the first electrode layer 11 and the second electrode layer 12 is much reduced. As shown in FIG. 4, the present liquid crystal display panel includes multiple slits along the edge of the subpixel, in these areas, light need not pass through two electrode layers. Thus, light transmittance along the edges of the subpixels is significantly improved, obviating the issue of dark areas along the edges of the subpixels.

Referring to FIG. 3, each of the plurality of branches 12B extends substantially throughout one dimension (e.g., the longitudinal dimension) of the second electrode layer 12. Any structure connecting the adjacent teeth or adjacent branches is disposed in peripheral regions of the second electrode layer 12. The first end E1 and the second end E2 of the first slit S1 are in peripheral regions of the second electrode layer 12. The bar connecting the adjacent teeth of the plurality of teeth is also in a peripheral region of the second electrode layer 12.

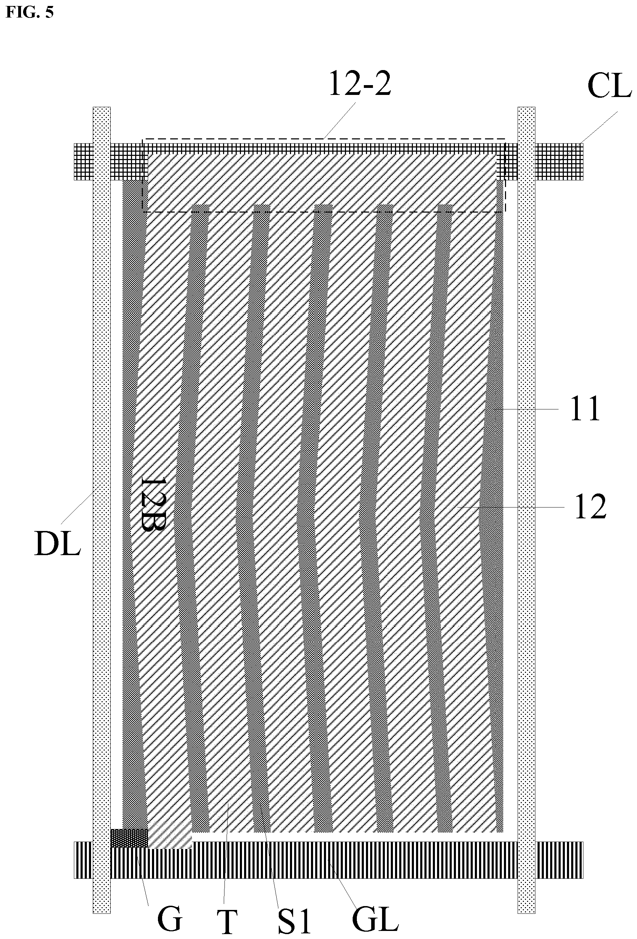

FIG. 5 is a schematic diagram illustrating the structure of a liquid crystal display panel not according to the invention. In the embodiment depicted in FIG. 3, the bar connecting the adjacent teeth or adjacent branches is a first bar 12-1 proximal to a gate line configured to provide a gate scanning signal to the subpixel for controlling light emission of the subpixel. In FIG. 5, the bar connecting the adjacent teeth or adjacent branches is a second bar 12-2 along a first edge of the subpixel opposite to a second edge of the subpixel where the gate line controlling light emission of the subpixel is located. Similar to the embodiment depicted in FIG. 3, the overlapping area and storage capacitance between the first electrode layer 11 and the second electrode layer 12 are significantly reduced as compared to conventional liquid crystal display panels. Light transmittance along the edges of the subpixels is enhanced, eliminating dark edges in image display.

According to the invention, the liquid crystal display panel further includes a plurality of common electrode signal lines. As shown in FIGs. 3 and 5, each subpixel is associated with a common electrode signal line CL. Optionally, the common electrode signal line CL is at a position proximal to the first edge of the subpixel opposite to a second edge of the subpixel where the gate line controlling light emission of the subpixel is located. Referring to FIG. 3, and according to the invention, a projection of the common electrode signal line CL on the base substrate at least partially overlaps with those of the plurality of teeth T at the first end E1.

Referring to FIG. 5, and not according to the invention, a projection of the common electrode signal line CL on the base substrate at least partially overlaps with that of the second bar 12-2. Optionally, the projection of the common electrode signal line CL on the base substrate substantially overlaps with that of the second bar 12-2. Optionally, the projection of the common electrode signal line CL on the base substrate completely covers that of the second bar 12-2. The regions in the subpixel area corresponding to the common electrode signal line CL are dark regions. By disposing the bar at least partially in the regions corresponding to the common electrode signal line CL, the aperture ratio and light transmittance of the display panel are minimally affected or unaffected by the bar.

As shown in FIG. 3 and FIG. 5, the common electrode signal line CL is in a same layer as the plurality of gate lines GL. Optionally, the common electrode signal line CL and the plurality of gate lines GL are made of a same material and patterned using a same mask plate. In some embodiments, the common electrode signal line CL is in a layer different from that of the plurality of gate lines GL.

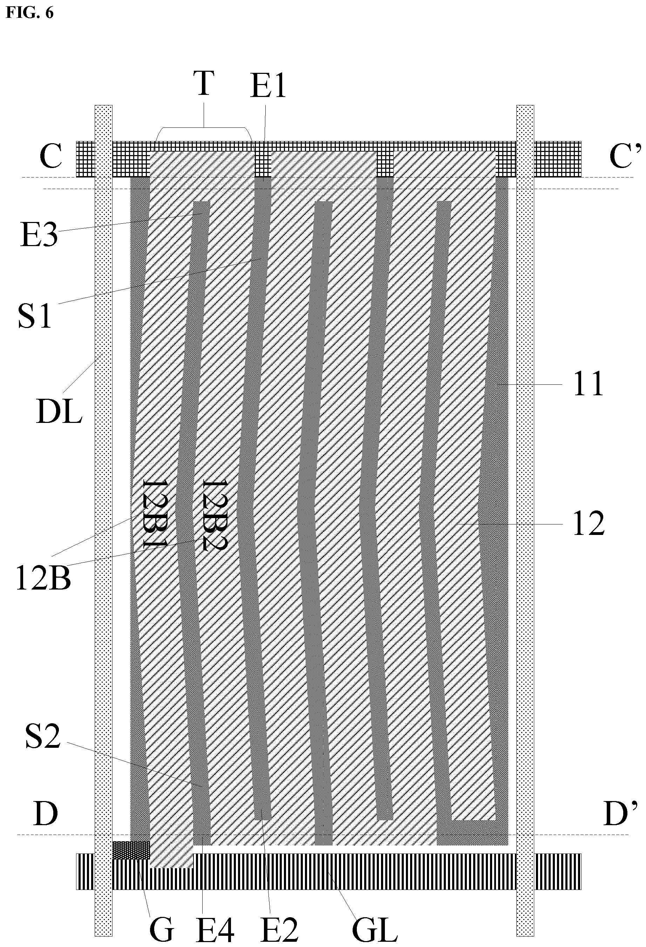

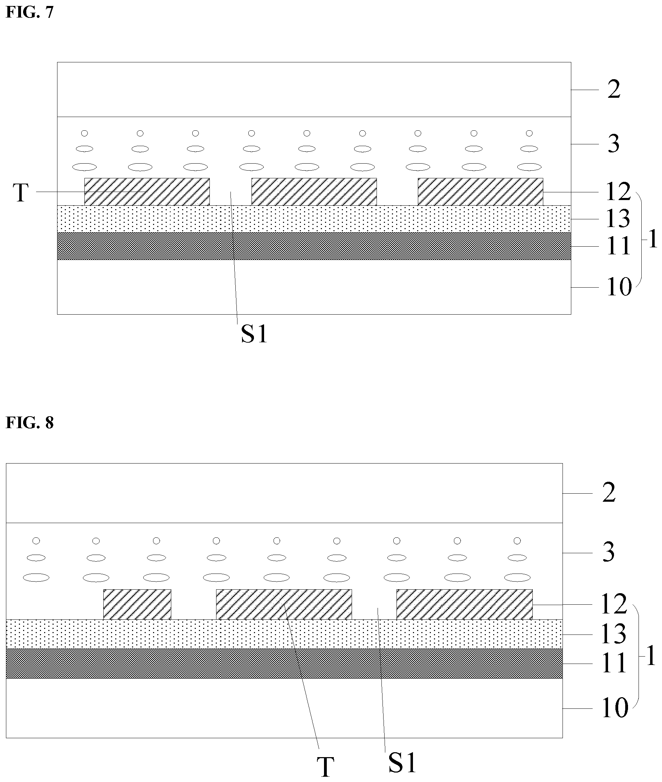

FIG. 6 is a schematic diagram illustrating the structure of a liquid crystal display panel not according to the invention. FIG. 7 is a cross-sectional view along C-C' line of the liquid crystal display panel in FIG. 6. FIG. 8 is a cross-sectional view along D-D' line of the liquid crystal display panel in FIG. 6. Referring to FIGs. 6 to 8, in each subpixel, the liquid crystal display panel includes a first electrode layer 11, a second electrode layer 12, and an insulating layer 13 between the first electrode layer 11 and the second electrode layer 12. The first electrode layer 11 and the second electrode layer 12 are configured to form a fringe field for driving liquid crystal molecules in the liquid crystal layer 3. Optionally, the second electrode layer 12 is a common electrode layer, the first electrode layer 11 is a pixel electrode layer, and the first electrode layer 11 is connected to the drain electrode of the switching thin film transistor.

As shown in FIG. 6, the first electrode layer 11 (e.g., a common electrode layer) is a plate electrode layer that extends substantially throughout the subpixel area, e.g., extending to a first edge of the subpixel (e.g., proximal to the C-C' line in FIG. 6). The second electrode layer 12 includes a plurality of branches 12B (e.g., a first branch 12B1 and a second branch 12B2 in FIG. 6), each of which extends substantially along a longitudinal direction of the subpixel. The plurality of branches 12B are spaced apart by a plurality of slits (e.g., a first slit S1 and a second slit S2 in FIG. 6).

The plurality of branches 12B may be grouped into a plurality of teeth T. In FIG. 6, each of the plurality of teeth T includes a first branch 12B1 and a second branch 12B2 of the plurality of branches 12B. The first branch 12B1 and the second branch 12B2 are connected to each other along the first edge of the subpixel proximal to the C-C' line in FIG. 6. Adjacent teeth of the plurality of teeth T are spaced apart by a first slit S1. The first branch 12B1 and the second branch 12B2 in each of the plurality of teeth T are spaced apart by a second slit S2.

The first slit S1 is open at a first end E1 (e.g., the end proximal to a first signal line along a first edge of the subpixel), and closed at a second end E2 (e.g., the end proximal to a second signal line along a second edge of the subpixel, the second edge opposite to the first edge). The first end E1 is opposite to the second end E2. The first slit S1 extends along a direction substantially parallel to the adjacent teeth (or adjacent branches 12B in an embodiment depicted in FIG. 6), the first end E1 of the first slit S1 proximal to a first end of one of the plurality of teeth T and distal to a second end of the one of the plurality of teeth T opposite to the first end of the one of the plurality of teeth T; and the second end E2 of the first slit S1 proximal to the second end of one of the plurality of teeth T and distal to the first end of the one of the plurality of teeth T. The first slit S1 extends substantially throughout one dimension of the second electrode layer 12, e.g., throughout the longitudinal dimension of the second electrode layer 12. Adjacent teeth are separated from each other at the first end E1 and connected to each other at the second end E2.

The second slit S2 is closed at a third end E3 (e.g., the end proximal to a first signal line along a first edge of the subpixel) and open at a fourth end E4 (e.g., the end proximal to a second signal line along a second edge of the subpixel, the second edge opposite to the first edge). The third end E3 is opposite to the fourth end E4. The second slit S2 extends along a direction substantially parallel to the first branch 12B1 and the second branch 12B2 in each of the plurality of teeth T, the third end E3 of the second slit S2 proximal to a first end of one of the plurality of teeth T and distal to a second end of the one of the plurality of teeth T opposite to the first end of the one of the plurality of teeth T; and the fourth end E4 of the second slit S2 proximal to the second end of one of the plurality of teeth T and distal to the first end of the one of the plurality of teeth T. The second slit S2 extends substantially throughout the one dimension of the second electrode layer 12, e.g., throughout the longitudinal dimension of the second electrode layer 12.

The second slit S2 is substantially parallel to the first slit S1. Optionally, the third end E3 is proximal to the first end E1 and distal to the second end E2, and the fourth end E4 is proximal to the second end E2 and distal to the first end E1. Optionally, the first branch 12B1 and the second branch 12B2 are separated from each other at the fourth end E4 and connected to each other at the third end E3.

The second electrode layer 12 is a zig-zag shaped electrode layer. As shown in FIG. 6, along both the first edge and the second edge of the subpixel, the liquid crystal display panel includes a plurality of teeth T. As shown in FIGs. 7 and 8, the present liquid crystal display panel includes multiple slits along both edges of the subpixel. As compared to conventional liquid crystal display panels, the liquid crystal display panel depicted in FIGs. 6 to 8 has greatly reduced overlapping areas between the first electrode layer 11 and the second electrode layer 12. The storage capacitance between the first electrode layer 11 and the second electrode layer 12 is much reduced. In the multiple slits areas along both edges of the subpixel, light need not pass through two electrode layers. Thus, light transmittance along the edges of the subpixels is significantly improved, obviating the issue of dark areas along the edges of the subpixels.

In FIGs. 3-7, the plurality of branches extend substantially along a longitudinal direction of the subpixel. Optionally, the plurality of branches extend substantially along a lateral direction of the subpixel.

The first electrode layer 11 and the second electrode layer 12 are both in the array substrate 1.

Referring to FIG. 6, each of the plurality of branches 12B extends substantially throughout one dimension (e.g., the longitudinal dimension) of the second electrode layer 12. Any structure connecting the adjacent teeth or adjacent branches is disposed in peripheral regions of the second electrode layer 12. The first end E1 and the second end E2 of the first slit S1, and the third end E3 and the fourth end E4 of the second slit S2 are in peripheral regions of the second electrode layer 12.

The second electrode layer 12 is a single domain electrode layer. The second electrode layer 12 is a multi-domain electrode layer. Optionally, the second electrode layer 12 includes a first domain and a second domain, branches and slits in the first domain extending substantially along a first direction, and branches and slits in the second domain extending substantially along a second direction.

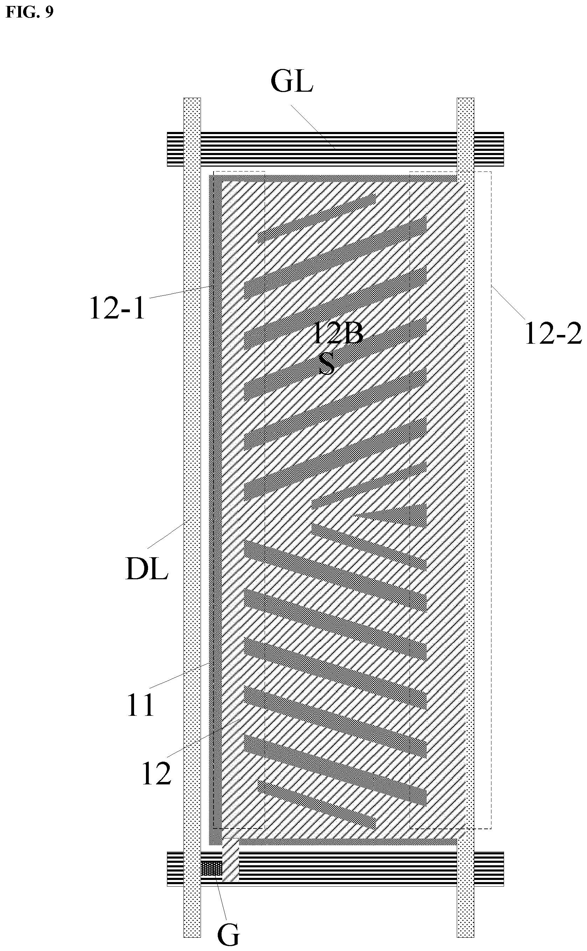

FIG. 9 is a schematic diagram illustrating the structure of a conventional liquid crystal display panel. Referring to FIG. 9, the conventional liquid crystal display panel in each subpixel includes a first electrode layer 11 and a second electrode layer 12. The second electrode layer 12 in some embodiments includes a first domain (the top domain) and a second domain (the bottom domain). The second electrode layer 12 includes a plurality of branches 12B spaced apart by a plurality of slits S. The plurality of branches 12B in the first domain extend substantially along a first direction. The plurality of branches 12B in the second domain extend substantially along a second direction. The plurality of branches 12B are connected together by a first bar 12-1 on the left side of the second electrode layer 12 and a second bar 12-2 on the right side of the second electrode layer 12. Each of the plurality of slits S has a first end and a second end, both of which are closed ends. For example, the first bar 12-1 and the second bar 12-2 close each of the plurality of slits S at its first end and the second end. The first electrode layer 11 extends to the edges of the subpixel. A projection of the first electrode layer 11 on the base substrate 10 overlaps with that of the first bar 12-1 of the second electrode layer 12 throughout the length of the first electrode layer 11 along the edge of the subpixel. Due to the large overlapping areas between the first electrode layer 11 and the second electrode layer 12, a large storage capacitance forms between the first electrode layer 11 and the second electrode layer 12, and light transmittance in the regions corresponding to the first bar 12-1 and the second bar 12-2 is reduced.

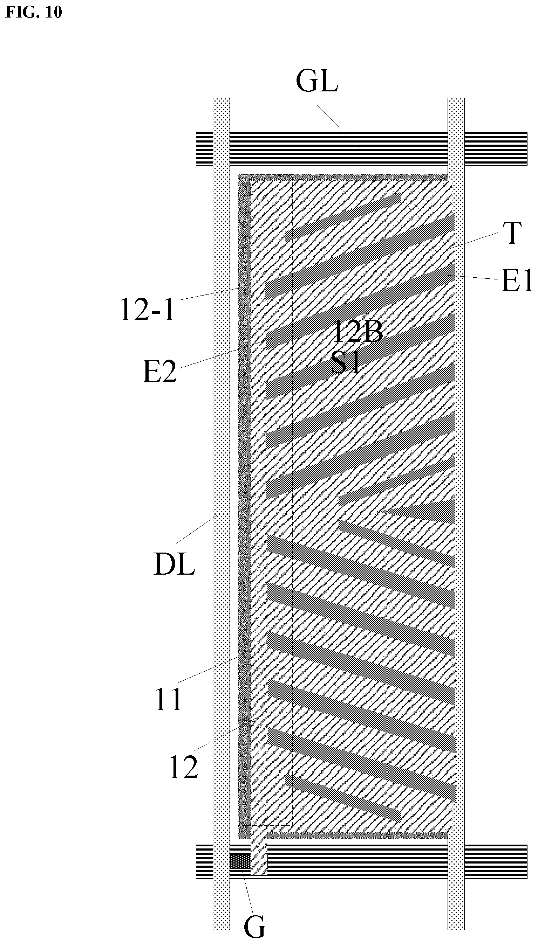

FIG. 10 is a schematic diagram illustrating the structure of a liquid crystal display panel not according to the invention. Referring to FIG. 10, the first electrode layer 11 (e.g., a common electrode layer) is a plate electrode layer that extends substantially throughout the subpixel area, e.g., extending to a first edge of the subpixel (e.g., a right longitudinal edge of the subpixel). The second electrode layer 12 includes a plurality of branches 12B, each of which extends substantially along a lateral direction of the subpixel. The plurality of branches 12B are spaced apart by a plurality of slits (e.g., a first slit S1 in FIG. 10). The plurality of branches 12B may be grouped into a plurality of teeth T. In the embodiment depicted in FIG. 10, each of the plurality of branches 12B corresponds to one of the plurality of teeth T, e.g., each of the plurality of teeth T includes only one of the plurality of branches 12B. Adjacent teeth of the plurality of teeth T are spaced apart by a first slit S1. Thus, in the embodiment depicted in FIG. 10, adjacent branches of the plurality of branches 12B are spaced apart by a first slit S1.

The first slit S1 is open at a first end E1 (e.g., the end proximal to a first signal line along a first edge of the subpixel), and closed at a second end E2 (e.g., the end proximal to a second signal line along a second edge of the subpixel, the second edge opposite to the first edge). The first end E1 is opposite to the second end E2. The first slit S1 extends along a direction substantially parallel to the adjacent teeth (or adjacent branches in an embodiment depicted in FIG. 10), the first end E1 of the first slit S1 proximal to a first end of one of the plurality of branches 12B and distal to a second end of the one of the plurality of branches 12B opposite to the first end of the one of the plurality of branches 12B; and the second end E2 of the first slit S1 proximal to the second end of one of the plurality of branches 12B and distal to the first end of the one of the plurality of branches 12B. The first slit S1 extends substantially throughout one dimension of the second electrode layer 12, e.g., throughout the lateral dimension of the second electrode layer 12. Adjacent teeth are separated from each other at the first end E1 and connected to each other at the second end E2. In the embodiments depicted in FIG. 10, adjacent branches of the plurality of branches 12B are separated from each other at the first end E1 and connected to each other at the second end E2.

The second electrode layer 12 depicted in FIG. 10 is a comb-shaped electrode layer having a plurality of teeth T and a bar (e.g., a first bar 12-1 as shown in FIG. 10) connecting the adjacent teeth of the plurality of teeth T at the second end E2. Each of the plurality of branches 12B extends substantially throughout one dimension (e.g., the lateral dimension) of the second electrode layer 12. Any structure connecting the adjacent teeth or adjacent branches is disposed in peripheral regions of the second electrode layer 12. The first end E1 and the second end E2 of the first slit S1 are in peripheral regions of the second electrode layer 12. The bar connecting the adjacent teeth of the plurality of teeth is also in a peripheral region of the second electrode layer 12.

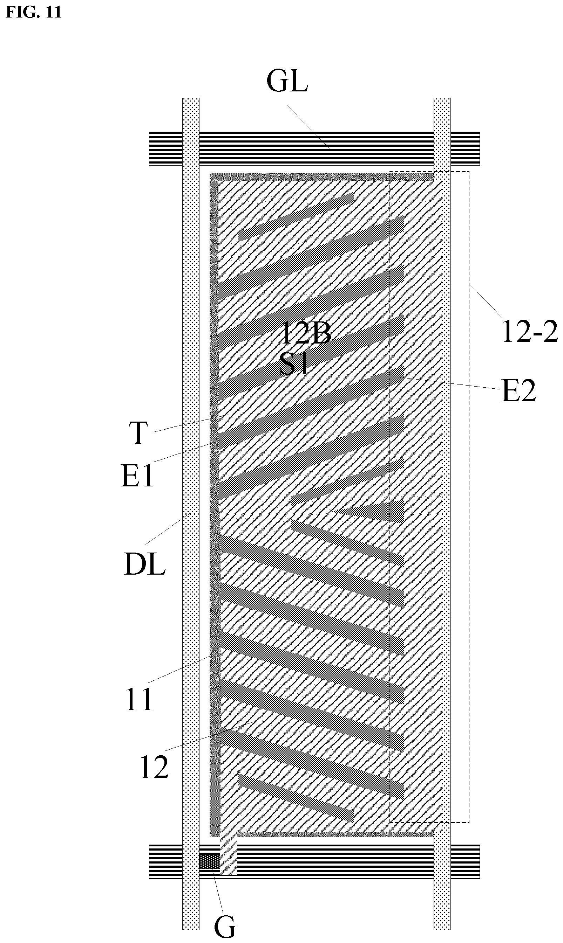

FIG. 11 is a schematic diagram illustrating the structure of a liquid crystal display panel not according to the invention. In FIG. 11, the bar connecting the adjacent teeth or adjacent branches is a second bar 12-2 along an edge on the right side of the subpixel. Similar to FIG. 10, the overlapping area and storage capacitance between the first electrode layer 11 and the second electrode layer 12 are significantly reduced as compared to conventional liquid crystal display panels. Light transmittance along the edges of the subpixels is enhanced, eliminating dark edges in image display.

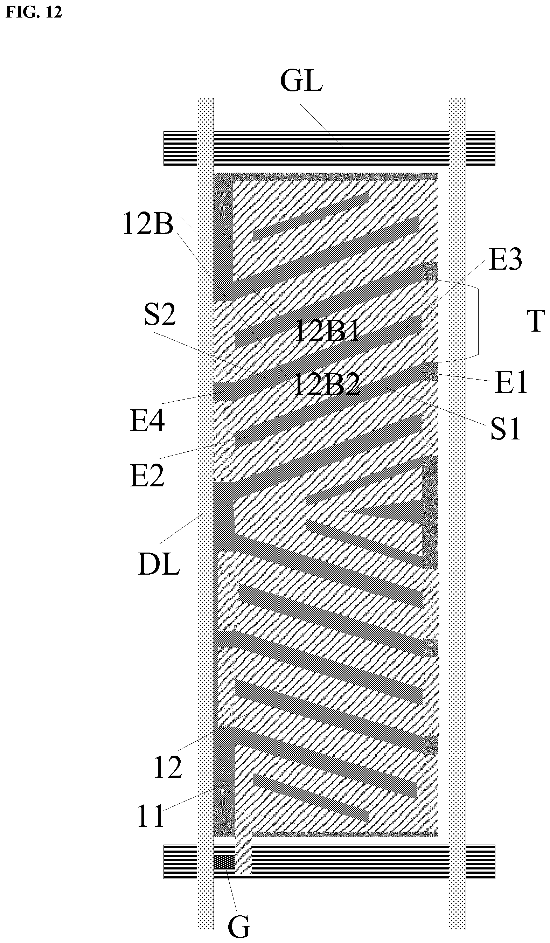

FIG. 12 is a schematic diagram illustrating the structure of a liquid crystal display panel not according to the invention. Referring to FIG. 12, the second electrode layer 12 includes a plurality of branches 12B (e.g., a first branch 12B1 and a second branch 12B2 in FIG. 12), each of which extends substantially along a lateral direction of the subpixel. The plurality of branches 12B are spaced apart by a plurality of slits (e.g., a first slit S1 and a second slit S2 in FIG. 12). The plurality of branches 12B are grouped into a plurality of teeth T, for example, in FIG. 12, each of the plurality of teeth T includes a first branch 12B1 and a second branch 12B2 of the plurality of branches 12B. The first branch 12B1 and the second branch 12B2 are connected to each other along the right edge of the subpixel. Adjacent teeth of the plurality of teeth T are spaced apart by a first slit S1. The first branch 12B1 and the second branch 12B2 in each of the plurality of teeth T are spaced apart by a second slit S2.

The first slit S1 is open at a first end E1 and closed at a second end E2, the first end E1 being opposite to the second end E2. The first slit S1 extends along a direction substantially parallel to the adjacent teeth or adjacent branches. The first slit S1 extends substantially throughout one dimension of the second electrode layer 12, e.g., throughout the lateral dimension of the second electrode layer 12. Adjacent teeth are separated from each other at the first end E1 and connected to each other at the second end E2. The second slit S2 is closed at a third end E3 and open at a fourth end E4, the third end E3 being opposite to the fourth end E4. The second slit S2 extends along a direction substantially parallel to the first branch 12B1 and the second branch 12B2 in each of the plurality of teeth T. The second slit S2 extends substantially throughout the one dimension of the second electrode layer 12, e.g., throughout the lateral dimension of the second electrode layer 12. In some embodiments, the second slit S2 is substantially parallel to the first slit S1. Optionally, the third end E3 is proximal to the first end E1 and distal to the second end E2, and the fourth end E4 is proximal to the second end E2 and distal to the first end E1. Optionally, the first branch 12B1 and the second branch 12B2 are separated from each other at the fourth end E4 and connected to each other at the third end E3. The second electrode layer 12 in FIG. 12 is a zig-zag shaped electrode layer. Along both the left edge and the right edge of the subpixel, the liquid crystal display panel includes a plurality of teeth T.

Referring to FIGs. 9 to 12, each of the plurality of branches 12B extends substantially throughout one dimension (e.g., the lateral dimension) of the second electrode layer 12. Any structure connecting the adjacent teeth or adjacent branches is disposed in peripheral regions of the second electrode layer 12. The first end E1 and the second end E2 of the first slit S1, and the third end E3 and the fourth end E4 of the second slit S2 are in peripheral regions of the second electrode layer 12.

According to the invention, the liquid crystal display panel is a fringe field driven liquid crystal display panel, in which the liquid crystal layer is driven by a fringe electric field. Examples of fringe field driven liquid crystal display panel include, but are not limited to, an advanced super-dimensional switching (ADS) liquid crystal display panel, and a fringe field switching (FFS) liquid crystal display panel.

In another aspect, the present disclosure provides a liquid crystal display apparatus having a liquid crystal display panel described herein. Examples of appropriate display apparatuses include, but are not limited to a mobile phone, a tablet computer, a television, a monitor, a notebook computer, a digital album, a gaming system, etc.

The foregoing description of the embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to explain the principles of the invention and its best mode practical application, thereby to enable persons skilled in the art to understand the invention for various embodiments and with various modifications as are suited to the particular use or implementation contemplated. The scope of the invention be defined by the claims appended hereto.

## Claims

1.  An array substrate (1) having a plurality of subpixel areas, the array substrate (1) in each of the plurality of subpixel areas comprising:

    a first electrode layer (11) and a second electrode layer (12) configured to form a fringe field for driving liquid crystal molecules;
    an insulating layer (13) between the first electrode layer (11) and the second electrode layer (12); and
    a common electrode signal line (CL);
    wherein the second electrode layer (12) is a comb-shaped electrode and comprises a plurality of branches (12B) ;
    wherein teeth are defined such that each of the plurality of teeth (T) comprises only one of the plurality of branches;
    adjacent teeth (T) of the plurality of teeth (T) are spaced apart by a first slit (S1), the first slit (S1) extending substantially throughout one dimension of the second electrode layer (12) of one of the plurality of subpixel areas;
    the adjacent teeth (T) separated from each other at their first end (E1) and connected to each other at their second end (E2);

the second electrode layer (12) further comprising a bar connecting the adjacent teeth (T) of the plurality of teeth (T) at their second end (E2); wherein the bar is located in a peripheral region of the second electrode layer (12); and **characterized in that** a projection of the common electrode signal line (CL) on a base substrate (10) of the array substrate (1) at least partially overlaps with projections of the plurality of teeth (T) at at their first ends (E1) on the base substrate (10).

2. The array substrate (1) of claim 1, wherein the first electrode layer (11) is a plate electrode layer extending substantially throughout one of the plurality of subpixel areas.

3. The array substrate (1) of claim 1, wherein the first end (E1) and the second end (E2) are in peripheral regions of the second electrode layer (12).

4. The array substrate of claim 1, wherein the plurality of branches (12B) extend substantially along a longitudinal direction of the subpixel area.

5. The array substrate (1) of claim 1, wherein the first electrode layer (11) is a common electrode layer, and the second electrode layer (12) is a pixel electrode layer;
or,
wherein the second electrode layer (12) is a common electrode layer, and the first electrode layer (11) is a pixel electrode layer.

6. A liquid crystal display panel, comprising:

the array substrate (1) of any one of claims 1 to 5;
a counter substrate (2) facing the array substrate (1); and
a liquid crystal layer (3) between the array substrate (1) and the counter substrate (2).

7. The liquid crystal display panel of claim 6, wherein the liquid crystal display panel is a fringe field driven liquid crystal display panel, in which liquid crystal molecules in the liquid crystal layer (3) is driven by a fringe electric .

8. A liquid crystal display apparatus, comprising the liquid crystal display panel of any one of claims 6 to 7.

**Patentansprüche**

1. Array-Substrat (1), aufweisend eine Vielzahl von Subpixelbereichen, wobei das Array-Substrat (1) in jedem der Vielzahl von Subpixelbereichen Folgendes umfasst:

eine erste Elektrodenschicht (11) und eine zweite Elektrodenschicht (12), die so konfiguriert sind, dass sie ein Streufeld zum Ansteuern von Flüssigkristallmolekülen bilden;
eine Isolierschicht (13) zwischen der ersten Elektrodenschicht (11) und der zweiten Elektrodenschicht (12); und
eine gemeinsame Elektroden-Signalleitung (CL);
wobei die zweite Elektrodenschicht (12) eine kammförmige Elektrode ist und eine Vielzahl von Verzweigungen (12B) umfasst;
wobei die Zähne so definiert sind, dass jeder der Vielzahl von Zähnen (T) nur einen der Vielzahl von Verzweigungen umfasst;
wobei benachbarte Zähne (T) der Vielzahl von Zähnen (T) durch einen ersten Schlitz (S1) voneinander beabstandet sind, wobei sich der erste Schlitz (S1) im Wesentlichen durch eine Dimension der zweiten Elektrodenschicht (12) von einem der Vielzahl von Subpixelbereichen erstreckt;
wobei die benachbarten Zähne (T) an ihrem ersten Ende (E1) voneinander getrennt und an ihrem zweiten Ende (E2) miteinander verbunden sind;
wobei die zweite Elektrodenschicht (12) weiter einen Stab aufweist, der die benachbarten Zähne (T) der Vielzahl von Zähnen (T) an ihrem zweiten Ende (E2) verbindet;
wobei der Stab in einem Randbereich der zweiten Elektrodenschicht (12) gelegen ist; und
**dadurch gekennzeichnet, dass**
eine Projektion der gemeinsamen Elektroden-Signalleitung (CL) auf einem Basissubstrat (10) des Array-Substrats (1) zumindest teilweise mit Projektionen der Vielzahl von Zähnen (T) an ihren ersten Enden (E1) auf dem Basissubstrat (10) überlappt.

2. Array-Substrat (1) nach Anspruch 1, wobei die erste Elektrodenschicht (11) eine Plattenelektrodenschicht ist, die sich im Wesentlichen über einen der Vielzahl von Subpixelbereichen erstreckt.

3. Array-Substrat (1) nach Anspruch 1, wobei sich das erste Ende (E1) und das zweite Ende (E2) in peripheren Bereichen der zweiten Elektrodenschicht (12) befinden.

4. Array-Substrat nach Anspruch 1, wobei sich die Vielzahl von Verzweigungen (12B) im Wesentlichen entlang einer Längsrichtung des Subpixelbereichs erstreckt.

5. Array-Substrat (1) nach Anspruch 1, wobei die erste Elektrodenschicht (11) eine gemeinsame Elektrodenschicht ist und die zweite Elektrodenschicht (12) eine Pixelelektrodenschicht ist;

oder

wobei die zweite Elektrodenschicht (12) eine gemeinsame Elektrodenschicht ist, und die erste Elektrodenschicht (11) eine Pixelelektrodenschicht ist.

6. Flüssigkristall-Anzeigetafel, umfassend:

das Array-Substrat (1) nach einem der Ansprüche 1 bis 5;
ein Gegensubstrat (2), das dem Array-Substrat (1) gegenüberliegt; und
eine Flüssigkristallschicht (3) zwischen dem Array-Substrat (1) und dem Gegensubstrat (2).

7. Flüssigkristall-Anzeigetafel nach Anspruch 6, wobei die Flüssigkristall-Anzeigetafel eine mittels Streufeld angesteuerte Flüssigkristall-Anzeigetafel ist, bei der Flüssigkristallmoleküle in der Flüssigkristallschicht (3) durch ein elektrisches Streufeld angesteuert werden.

8. Flüssigkristall-Anzeigeeinrichtung, die die Flüssigkristall-Anzeigetafel nach einem der Ansprüche 6 bis 7 umfasst.

## Revendications

1. Substrat de réseau (1) présentant une pluralité de zones de sous-pixel, le substrat de réseau (1) dans chacune de la pluralité de zones de sous-pixel comprenant :

une première couche d'électrode (11) et une seconde couche d'électrode (12) configurées pour former un champ de frange pour entraîner des molécules de cristaux liquides ;
une couche isolante (13) entre la première couche d'électrode (11) et la seconde couche d'électrode (12) ; et
une ligne de signal d'électrode commune (CL) ;
dans lequel la seconde couche d'électrode (12) est une électrode en forme de peigne et comprend une pluralité de branches (12B) ;
dans lequel des dents sont définies de telle sorte que chacune de la pluralité de dents (T) ne comprend qu'une seule de la pluralité de branches ;
des dents adjacentes (T) de la pluralité de dents (T) sont espacées par une première fente (S1), la première fente (S1) s'étendant sensiblement sur une dimension de la seconde couche d'électrode (12) de l'une de la pluralité de zones de sous-pixel ;
les dents adjacentes (T) séparées l'une de l'autre à leur première extrémité (E1) et reliées l'une à l'autre à leur seconde extrémité (E2) ;
la seconde couche d'électrode (12) comprenant en outre une barre reliant les dents adjacentes (T) de la pluralité de dents (T) à leur seconde extrémité (E2) ;
dans lequel la barre est située dans une région périphérique de la seconde couche d'électrode (12) ; et
**caractérisé en ce qu'**une projection de la ligne de signal d'électrode commune (CL) sur un substrat de base (10) du substrat de réseau (1) chevauche au moins partiellement des projections de la pluralité de dents (T) à leurs premières extrémités (E1) sur le substrat de base (10).

2. Substrat de réseau (1) selon la revendication 1, dans lequel la première couche d'électrode (11) est une couche d'électrode en plaque s'étendant sensiblement à travers l'une de la pluralité de zones de sous-pixel.

3. Substrat de réseau (1) selon la revendication 1, dans lequel la première extrémité (E1) et la seconde extrémité (E2) sont dans des régions périphériques de la seconde couche d'électrode (12).

4. Substrat de réseau selon la revendication 1, dans lequel la pluralité de branches (12B) s'étendent sensiblement le long d'une direction longitudinale de la zone de sous-pixel.

5. Substrat de réseau (1) selon la revendication 1, dans lequel la première couche d'électrode (11) est une couche d'électrode commune, et la seconde couche d'électrode (12) est une couche d'électrode de pixel ; ou,
dans lequel la seconde couche d'électrode (12) est une couche d'électrode commune, et la première couche d'électrode (11) est une couche d'électrode de pixel.

6. Panneau d'affichage à cristaux liquides, comprenant :

le substrat de réseau (1) selon l'une quelconque des revendications 1 à 5 ;
un contre-substrat (2) faisant face au substrat de réseau (1) ; et
une couche de cristaux liquides (3) entre le substrat de réseau (1) et le contre-substrat (2).

7. Panneau d'affichage à cristaux liquides selon la revendication 6, dans lequel le panneau d'affichage à cristaux liquides est un panneau d'affichage à cristaux liquides entraîné par un champ de frange, dans lequel des molécules de cristaux liquides dans la couche de cristaux liquides (3) sont entraînées par une frange électrique.

**8.** Appareil d'affichage à cristaux liquides, comprenant le panneau d'affichage à cristaux liquides selon l'une quelconque des revendications 6 à 7.

**FIG. 1**

12-2

A     A'

11

12

DL

12B S

G    GL    12-1

**FIG. 2**

**FIG. 3**

**FIG. 4**

**FIG. 5**

FIG. 6

**FIG. 7**

**FIG. 8**

**FIG. 9**

GL

12-1

12-2

12BS

DL

11

12

G

**FIG. 10**

**FIG. 11**

**FIG. 12**

**EP 3 607 398 B1**

**REFERENCES CITED IN THE DESCRIPTION**

**Patent documents cited in the description**

- US 2008068539 A1
- CN 105676550 A
- US 2012249496 A1